# EUROPEAN PATENT APPLICATION

(11) **EP 1 024 185 A2**
(43) Date of publication of application: **02.08.2000**
(21) Application number: 00101096.6
(22) Date of filing: 20.01.2000
(51) Int. Cl.: C09K 11/02, H01J 61/46

(54) **Silica nanoparticle binder for phosphor coatings**

(30) Priority: 29.01.1999 US 117857 P
(71) Applicant: OSRAM SYLVANIA INC., Danvers, MA 01923 (US)
(72) Inventor: Shaw, Cathy M., Manchester, MA 01944 (US); Evans, Jean M., North Hampton, NH 03862 (US)
(74) Representative: Pokorny, Gerd

(57) **Abstract**

An inorganic binder for the phosphor coatings of fluorescent lamps is described. The binder comprises silica nanoparticles which are dispersed with the phosphor in the coating. The use of lesser amounts of silica nanoparticles in place of standard aluminum oxide binders yields increased efficiency from fluorescent lamps which use vacuum ultraviolet light as a primary source of phosphor excitation. The increased efficiency is achieved without sacrificing coating adherence.

## Description

### CROSS REFERENCES TO RELATED APPLICATIONS

This application claims the benefit of U.S. Provisional Application No. 60/117,857, filed 1/29/99. This application is a continuation-in-part of copending application Serial No. 09/162,192, filed 9/28/98, which is incorporated herein by reference.

### TECHNICAL FIELD

This invention relates to phosphor coatings. More particularly, this invention relates to binder materials used in phosphor coatings for lighting applications.

### BACKGROUND ART

Ultrafine aluminum oxides such as Aluminum Oxide C (AOC) have been used traditionally as an inorganic binder in phosphor coatings for fluorescent lighting. AOC has a typical particle size of about 20 nm and may comprise upwards of six weight percent of the phosphor coating. In conventional fluorescent lamps, phosphor excitation is achieved primarily with the 254 nm line from a low pressure mercury discharge. Since AOC is nearly transparent to the 254 nm radiation, the presence of AOC in the phosphor coating does not significantly impact the light output of the fluorescent lamp.

The presence of AOC in other discharge lamps is not so benign. In neon discharge lamps, phosphor excitation is achieved primarily with the 74 nm neon line which is in the vacuum ultraviolet (VUV) region of the electromagnetic spectrum, i.e., less than about 170 nm. Such neon discharge lamps are described in U.S. Patent 5,523,655 to Jennato et al. AOC has a strong absorption at 74 nm and therefore the light output from neon discharge lamps is significantly attenuated by the presence of AOC. For example, 5.9 wt.% AOC effects a 30-40% decrease in lumen output relative a phosphor only coating. However, lowering the amount of AOC results is poor adhesion of the coating. Thus, in such applications, it would be advantageous to have an alternative inorganic binder which results in increased lamp efficiency (lumens/watt) without sacrificing coating adherence.

### SUMMARY OF THE INVENTION

It is an object of the invention to obviate the disadvantages of the prior art.

It is another object of the invention to provide an inorganic binder for use in fluorescent lamps using vacuum ultraviolet radiation as a primary source of phosphor excitation.

It is a further object of the invention to provide a coating suspension for use in such fluorescent lamps.

In accordance with one object the invention, there is provided a phosphor coating for fluorescent lamps using vacuum ultraviolet light as a primary source of phosphor excitation, said coating comprising a phosphor and an amount of an inorganic binder comprised of silica nanoparticles.

In accordance with another object of the invention, there is provided a phosphor coating suspension for fluorescent lamps using vacuum ultraviolet light as a primary source of phosphor excitation, said coating suspension comprising an amount of a phosphor and an amount of an inorganic binder suspended in a liquid medium, the inorganic binder comprising silica nanoparticles.

### BRIEF DESCRIPTION OF THE DRAWINGS

Fig. 1 is a schematic diagram of the testing apparatus used to evaluate phosphor coating adherence.

Fig. 2 is a plot of percentage phosphor loss as a function of air flow through phosphor coated tubes.

### DESCRIPTION OF THE PREFERRED EMBODIMENTS

For a better understanding of the present invention, together with other and further objects, advantages and capabilities thereof, reference is made to the following disclosure and appended claims taken in conjunction with the above-described drawings.

This invention employs silica (SiO₂) nanoparticles as the inorganic binder in the phosphor coating to increase the efficiency of fluorescent lamps using vacuum ultraviolet as a primary source of phosphor excitation. The increased efficiency is achieved without sacrificing coating adherence. Typically, the SiO₂ nanoparticles range in size from about 12 to about 40 nm with a corresponding range in surface area of about 200 to about 50 m²/g. Both particle size and surface area must be considered when evaluating the effect of the SiO₂ nanoparticles on phosphor adherence. Preferably, the silica nanoparticles have a particle size of about 12 nm and a surface area of about 200 m²/g.

In order for the silica nanoparticles to be effective in promoting phosphor adherence, the particles must be well dispersed in the phosphor suspension (i.e., low SiO₂ particle-particle agglomeration) and provide increased intergranular contact of the phosphor particles. The dispersion and stability of the SiO₂ nanoparticles in an aqueous system is dependent on the pH of the system. Colloidal silica-water solutions display good stability for pH values of 9 to 10. However, the particles undergo rapid aggregation at pH values of 5 to 7. If the phosphor and SiO₂ nanoparticles are well dispersed in the coating suspension, smaller amounts of the SiO₂ nanoparticles can be used to obtain satisfactory phosphor adherence to the glass. Decreasing the amount of binder phase results in an increase in the lumens/watt (LPW) output of the lamp.

The phosphor coating suspension is made by combining the phosphor with an amount of an aqueous solution of polyethylene oxide. An amount of a defoaming agent is added and the pH of the suspension is adjusted to above 8 with 1N ammonium hydroxide. An amount of the colloidal silica is added and the pH is adjusted again to a pH of about 8.5 to about 9.5 with ammonium hydroxide. The suspension is then mixed before being applied to the glass tubing. The colloidal silica dispersion contains the SiO₂ nanoparticles and is commercially available as AEROSIL OX50 (Degussa AG), AEROSIL 200 (Degussa AG), LUDOX AS40 (DuPont), and LUDOX TMA (DuPont). The specific proportions of the suspension components will vary according to the lamp application and manufacturing technique. Preferably, the silica nanoparticles comprise from about 0.5 to about 2.5 weight percent of the phosphor coating. More preferably, the silica nanoparticles comprise about 0.5 weight percent of the phosphor coating.

The following non-limiting examples are presented.

### EXAMPLES

Coating suspensions were prepared which contained a cerium-activated yttrium aluminum garnet phosphor (Sylvania Type 251) and various amounts of SiO₂ nanoparticles. The coatings were applied using a fill and drain procedure to a 10 inch long glass tube (3 mm I.D. x 5 mm O.D. Corning Type 1724 glass). Two phosphor coats were applied. The second coat was applied in the opposite fill/drain position. Each coat was dried vertically at 95°C with flowing air, and fired at 600°C for approximately 25 minutes in dry air. Coated tubes were stored in a nitrogen or argon box. The final coating weight for each tube was approximately 100 mg.

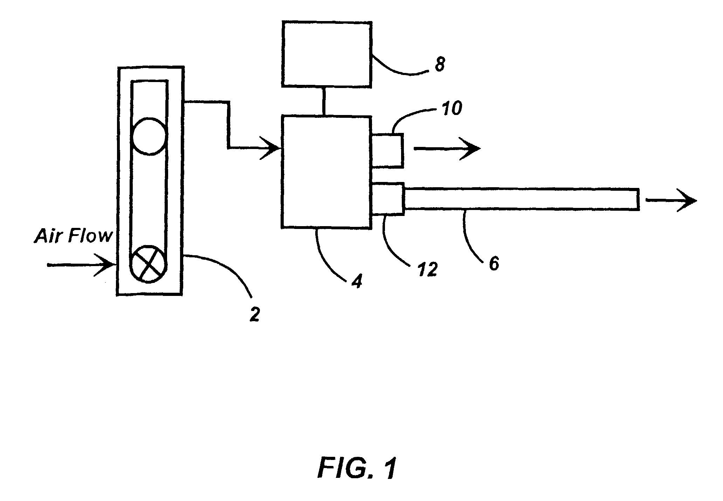

A modified blow test was utilized to evaluate phosphor adherence. Fig. 1 shows a schematic of the test set-up. Air flow, as indicated by the arrows, was regulated using a flow meter 2. The direction of flow was actuated with a 3-way solenoid valve 4 controlled by switch/timer 8. Phosphor coated tubes 6 were attached to the apparatus with a compression fitting. The air flow prior to testing was directed through open port 10. Phosphor adherence was determined by diverting the air flow to the sample position 12 for two seconds. The coated tube was then removed and weighed to determine the percent phosphor removed from the tube. The air flow was varied to obtain several data points corresponding to removal of approximately 10-70% of the phosphor coating from the tube. A separate coated tube was used for each measurement. Two to six coated tubes were tested for each flow setting. The adherence properties of these coatings were compared with coatings having AOC as the inorganic binder and coatings having no inorganic binder at all (phosphor only).

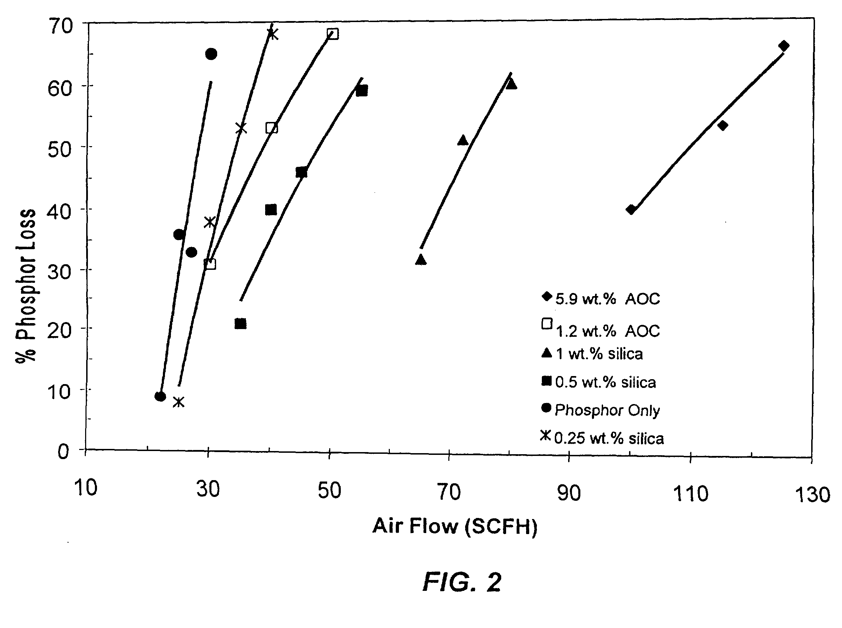

Fig. 2 shows the phosphor adherence test data for various coatings. The average percent phosphor loss for a particular coating is given as a function of air flow. There was considerable variation in some of the data. In particular, the percent variation in the data was highest for the phosphor only system, a very weak coating. The values for the 1.2 wt.% AOC coating represent the minimum acceptable level of adherence for these lamps. Relative comparisons of the curves indicate that SiO₂ nanoparticle binder additions of 0.5 wt.% result in slightly higher phosphor adherence than the 1.2 wt.% AOC system; i.e., much less (approximately half) SiO₂ nanoparticle binder is required to attain comparable phosphor adherence. Decreasing the SiO₂ nanoparticle content to 0.25 wt.% results in unacceptable phosphor adherence.

Neon amber lamps were made from similarly prepared tubes. The lumen output of these lamps (at the same power input) is compared in Table 1. The data show that decreasing the SiO₂ nanoparticle loading in the coating improves the lumen output relative to the standard 5.9 wt. % AOC system under the same operating conditions. The combined data demonstrates that lamp efficiency can be improved without sacrificing phosphor coating adherence by using lesser amounts of SiO₂ nanoparticles as the inorganic binder in place of AOC.

**Table 1**

| Phosphor Coating | Lamp Output (Lumens) |
|---|---|
| 5.9 wt.% AOC | 220-230 |
| 2.5 wt.% silica | 244 |
| 1.3 wt.% silica | 253 |
| 1 wt.% silica | 270 |
| 0.8 wt.% silica | 278 |
| 0.5 wt.% silica | 290 |

While there has been shown and described what are at the present considered the preferred embodiments of the invention, it will be obvious to those skilled in the art that various changes and modifications may be made therein without departing from the scope of the invention as defined by the appended claims.

## Claims

1. A phosphor coating for fluorescent lamps using vacuum ultraviolet light as a primary source of phosphor excitation, said coating comprising: a phosphor and an amount of an inorganic binder comprised of silica nanoparticles.

2. The coating of claim 1 wherein the silica nanoparticles comprise about 0.5 to about 2.5 weight percent of the coating.

3. The coating of claim 1 wherein the silica nanoparticles comprise about 0.5 weight percent of the coating.

4. The coating of claim 1 wherein the vacuum ultraviolet light is generated by a neon gas discharge.

5. The coating of claim 1 wherein the silica nanoparticles have a particle size of from about 12 to about 40 nm and a surface area of from about 200 to about 50 m²/g.

6. The coating of claim 1 wherein the silica nanoparticles have a particle size of about 12 nm and a surface area of about 200 m²/g.

7. A phosphor coating suspension for fluorescent lamps using vacuum ultraviolet light as a primary source of phosphor excitation, said coating suspension comprising: an amount of a phosphor and an amount of an inorganic binder suspended in a liquid medium, the inorganic binder comprising silica nanoparticles.

8. The coating suspension of claim 7 wherein the suspension has a pH of from about 8.5 to about 9.5.

9. The coating suspension of claim 7 wherein the silica nanoparticles comprise about 0.5 to about 2.5 weight percent of the total amount of phosphor and binder.

10. The coating suspension of claim 7 wherein the silica nanoparticles comprise about 0.5 weight percent of the total amount of phosphor and binder.

11. The coating of suspension claim 9 wherein the silica nanoparticles comprise about 0.5 to about 2.5 weight percent of the total amount of phosphor and binder.

12. The coating suspension of claim 9 wherein the silica nanoparticles comprise about 0.5 weight percent of the total amount of phosphor and binder.

13. The coating suspension of claim 7 wherein the silica nanoparticles have a particle size of from about 12 to about 40 nm and a surface area of from about 200 to about 50 m²/g.

14. The coating suspension of claim 9 wherein the silica nanoparticles have a particle size of from about 12 to about 40 nm and a surface area of from about 200 to about 50 m²/g.
